# EUROPEAN PATENT APPLICATION

(11) **EP 4 704 320 A1**
(43) Date of publication of application: **04.03.2026**
(21) Application number: 25195107.5
(22) Date of filing: 11.08.2025
(51) Int. Cl.: H02M 3/158, H02M 1/00, H02M 3/00

(54) **POWER MANAGEMENT INTEGRATED CIRCUITS FOR SUPPLYING MULTIPLE VOLTAGES**

(30) Priority: 26.08.2024 US 202418815317
(71) Applicant: Avago Technologies International Sales Pte. Limited, Singapore 768923 (SG)
(72) Inventor: Walley, John, Ladera Ranch, CA, 92694 (US); Rutherford, Mark, Wellington, CO, 80549 (US)
(74) Representative: Grünecker Patent- und Rechtsanwälte PartG mbB

(57) **Abstract**

An example power management circuit includes a first pin, a second pin, a p-channel metal-oxide-semiconductor field-effect transistor (PMOS FET), and a controller. The first pin is connectable to an input voltage, and the second pin is connectable to a first external capacitor to supply a positive voltage. The PMOS FET is connected to the first pin to receive the input voltage and is connectable to an external inductor and to a second external capacitor to supply a negative voltage. The controller is configured to turn on the PMOS FET to increase an amount of current flowing through the external inductor during a first time period, and to turn off the PMOS FET to negatively charge the second external capacitor during a second time period.

## Description

### BACKGROUND

The present disclosure relates, in general, to power management integrated circuits that can be used in a variety of different types of electronic devices. Power management circuits that can supply multiple voltages in an efficient manner are generally desired in various applications.

### BRIEF DESCRIPTION OF THE DRAWINGS

FIG. 1 is a circuit diagram showing an example architecture for a power management integrated circuit (PMIC), in accordance with some aspects of the disclosure.
FIG. 2 is a circuit diagram showing example components of the PMIC of FIG. 1 that can be used to supply multiple voltages is shown, in accordance with some aspects of the disclosure.
FIG. 3 is an example state diagram illustrating various aspects of the operation of the PMIC of FIG. 1, in accordance with some aspects of the disclosure.
FIG. 4 is a diagram showing an example noise control circuit that can be implemented in the PMIC of FIG. 1, in accordance with some aspects of the disclosure.
FIG. 5 is a circuit diagram showing an alternative example architecture for a PMIC, in accordance with some aspects of the disclosure.

### DETAILED DESCRIPTION

In the following description, for the purposes of explanation, numerous details are set forth to provide a thorough understanding of the disclosure. It will be apparent to one skilled in the art, however, that other aspects can be practiced without some details. Different examples are described herein, and while various features are ascribed to the examples, it should be appreciated that the features described with respect to one example may be incorporated with other examples as well. By the same token, however, no single feature or features of any described example should be considered essential to every example, as other examples may omit such features.

When an element is referred to herein as being "connected" or "coupled" to another element, it is to be understood that the elements can be directly connected to the other element, or have intervening elements present between the elements. In contrast, when an element is referred to as being "directly connected" or "directly coupled" to another element, it should be understood that no intervening elements are present in the "direct" connection between the elements. However, the existence of a direct connection does not exclude other connections, in which intervening elements may be present.

When an element is referred to herein as being "disposed" in some manner relative to another element (e.g., disposed on, disposed between, disposed under, disposed adjacent to, or disposed in some other relative manner), it is to be understood that the elements can be directly disposed relative to the other element (e.g., disposed directly on another element), or have intervening elements present between the elements. In contrast, when an element is referred to as being "disposed directly" relative to another element, it should be understood that no intervening elements are present in the "direct" example. However, the existence of a direct disposition does not exclude other examples in which intervening elements may be present.

Likewise, when an element is referred to herein as being a "layer", it is to be understood that the layer can be a single layer or include multiple layers. For example, a conductive layer can include multiple different conductive materials or multiple layers of different conductive materials, and a dielectric layer may comprise multiple dielectric materials or multiple layers of dielectric materials. When a layer is described as being coupled or connected to another layer, it is to be understood that the coupled or connected layers may include intervening elements present between the coupled or connected layers. In contrast, when a layer is referred to as being "directly" connected or coupled to another layer, it should be understood that no intervening elements are present between the layers. However, the existence of directly coupled or connected layers does not exclude other connections in which intervening elements may be present.

Moreover, the terms left, right, front, back, top, bottom, forward, reverse, clockwise and counterclockwise are used for purposes of explanation only and are not limited to any fixed direction or orientation. Rather, they are used merely to indicate relative locations and/or directions between various parts of an object and/or components.

Furthermore, unless otherwise indicated, all numbers used herein to express quantities, dimensions, and so forth should be understood as being modified in all instances by the term "about". In this application, the use of the singular includes the plural unless specifically stated otherwise, and use of the terms "and" and "or" means "and/or" unless otherwise indicated. Moreover, the use of the terms "including" and "having", as well as other forms, such as "includes", "included", "has", "have", and "had", should be considered non-exclusive. Also, terms such as "element" or "component" encompass both elements and components comprising one unit and elements and components that comprise more than one unit, unless specifically stated otherwise.

While some features and aspects have been described with respect to the examples, one skilled in the art will recognize that numerous modifications are possible. For example, the methods and processes described herein may be implemented using hardware components, custom integrated circuits (ICs), programmable logic, and/or any combination thereof. Further, while various methods and processes described herein may be described with respect to particular structural and/or functional components for ease of description, methods provided by various embodiments are not limited to any particular structural and/or functional architecture but instead can be implemented in any suitable hardware configuration. Similarly, while some functionality is ascribed to one or more system components, unless the context dictates otherwise, this functionality can be distributed among various other system components in accordance with the several embodiments.

Moreover, while the procedures of the methods and processes described herein are described in a particular order for ease of description, unless the context dictates otherwise, various procedures may be reordered, added, and/or omitted in accordance with various implementations. Moreover, the procedures described with respect to one method or process may be incorporated within other described methods or processes; likewise, system components described according to a particular structural architecture and/or with respect to one system may be organized in alternative structural architectures and/or incorporated within other described systems. Hence, while various examples are described with or without some features for ease of description and to illustrate aspects of those embodiments, the various components and/or features described herein with respect to a particular example can be substituted, added and/or subtracted from among other described embodiments, unless the context dictates otherwise. Consequently, although several examples are described above, it will be appreciated that the disclosure is intended to cover all modifications and equivalents within the scope of the following claims.

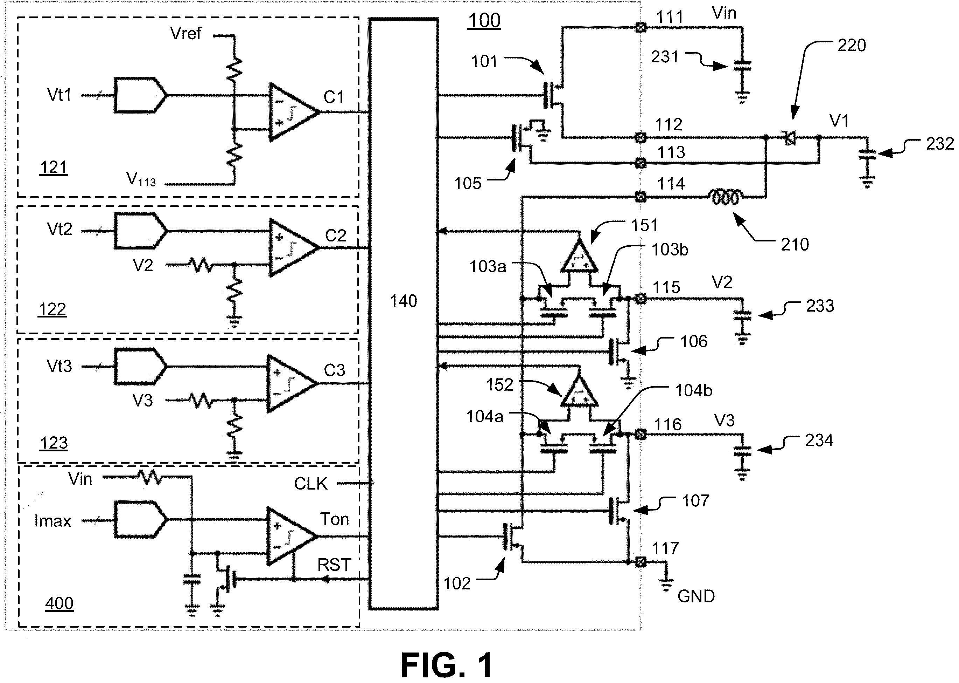

Referring to FIG. 1, a circuit diagram showing an example architecture for an example power management integrated circuit (PMIC) 100 is shown, in accordance with some aspects of the disclosure. The PMIC 100 can be used to provide multiple supply voltages for a display of an electronic device, among other possible uses. For example, the PMIC 100 can be used included in an electronic device (e.g., a smartphone, a personal computer, a wearable device, etc.) to provide supply voltages for a display (e.g., an organic light-emitting diode (OLED) display, etc.) of the electronic device. Among other possibilities, the PMIC 100 can be used to provide three supply voltages of +18V, +10V, and -14V. Advantageously, the PMIC 100 can be manufactured using a low cost, bulk complementary metal-oxide-semiconductor (CMOS) process. As such, the PMIC 100 may not require use of a higher cost, specialty manufacturing process as some alternative PMICs otherwise might. The PMIC 100 can provide a high level of integration by requiring a relatively low external bill of materials (BOM) for integration with the electronic device in which the PMIC 100 is installed.

The PMIC 100 can include a specific architecture as well as specific control schemes and noise cancellation features that can provide advantages in various applications. As detailed further below, the architecture of the PMIC 100 can allow the PMIC 100 to provide a large negative supply voltage (e.g., at least -6V). The PMIC 100 can generally be implemented using a single inductor multiple output (SIMO) architecture that allows for use of only one external inductor (e.g., the external inductor 210). The PMIC 100 can generate the large negative supply voltage (e.g., -14V), at least in part, by using an external diode (e.g., the external diode 220) or transistor (e.g., a field-effect transistor, etc.). The SIMO 100 can also include components such as, for example, precision light-emitting diode (LED) drivers in addition to the audio band noise reduction features. The PMIC 100 can be particularly advantageous for use in applications such as three-dimensional (3D) glasses due to the added audio band noise that may arise in these applications due to the close proximity of the 3D glasses to the human face and ears, for example.

As shown in FIG. 1, the PMIC 100 can include six primary transistors: a transistor 101, a transistor 102, a transistor 103a, a transistor 103b, a transistor 104a, and a transistor 104b. The PMIC 100 can also include additional transistors, including a transistor 105, a transistor 106, and a transistor 107. The transistor 101, the transistor 102, the transistor 103a, the transistor 103b, the transistor 104a, the transistor 104b, the transistor 105, the transistor 106, and the transistor 107 can, in some examples, be implemented as metal-oxide-semiconductor field-effect transistors (MOSFETs). As detailed further below, the transistor 101 in particular can be implemented as a PMOS FET (e.g., positive, p-channel), whereas the transistor 102, the transistor 103a, the transistor 103b, the transistor 104a, the transistor 104b can be implemented as NMOS FETs (e.g., negative, n-channel). The transistor 105, the transistor 106, and the transistor 107 can also be implemented as NMOS FETs, in some examples. The transistor 101, the transistor 102, the transistor 103a, the transistor 103b, the transistor 104a, the transistor 104b can be 24V FETs, for example. Depending on the application, other types of transistors and/or other types of switching components can be used to implement the transistor 101, the transistor 102, the transistor 103a, the transistor 103b, the transistor 104a, the transistor 104b, the transistor 105, the transistor 106, and the transistor 107.

The transistor 101, the transistor 102, the transistor 103a, the transistor 103b, the transistor 104a, the transistor 104b, the transistor 105, the transistor 106, and the transistor 107 can generally be controlled by a controller 140, as shown in FIG. 1. For example, the controller 140 can provide gate drive control signals to gate terminals of each of the transistor 101, the transistor 102, the transistor 103a, the transistor 103b, the transistor 104a, the transistor 104b, the transistor 105, the transistor 106, and the transistor 107 to toggle the transistor 101, the transistor 102, the transistor 103a, the transistor 103b, the transistor 104a, the transistor 104b, the transistor 105, the transistor 106, and the transistor 107 on and off. The controller 140 can include any suitable types of memory and processing circuitry, and the processing circuitry of the controller 140 can be configured to execute instructions stored in the memory of the controller 140 to cause the controller 140 to perform the various operations of the controller 140 as detailed herein. For example, the controller 140 can include non-transitory machine-readable storage media having instructions stored thereon that, when executed by the processing circuitry, cause the processing circuitry to perform various operations in accordance with the instructions.

As shown in FIG. 1, the PMIC 100 can also include seven primary input/output (I/O) pins: a pin 111, a pin 112, a pin 113, a pin 114, a pin 115, a pin 116, and a pin 117. The pin 111, the pin 112, the pin 113, the pin 114, the pin 115, the pin 116, and the pin 117 can electrically connect the PMIC 100 to an external electronic device. To facilitate use of the PMIC 100, the external electronic device can include various components as shown in FIG. 1. In particular, the external electronic device can include an external inductor 210, an external diode 220, an external capacitor 231, an external capacitor 232, an external capacitor 233, and an external capacitor 234. The pin 111, the pin 112, the pin 113, the pin 114, the pin 115, the pin 116, the pin 117 can be implemented in various ways, including by using various different types of conductive materials.

As shown in FIG. 1, the external capacitor 231 can be connected between ground and the pin 111 on the PMIC 100. Accordingly, the pin 111 can be connectable to the external capacitor 231 to receive an input voltage (Vin). The pin 117 on the PMIC 100 can then be connectable to ground (e.g., a reference voltage level in the external electronic device). The external capacitor 232 can be connected between ground, and variously between the pin 112, the pin 113, the pin 114, the external inductor 210, and the external diode 220. As detailed further below, the transistor 101 can be connectable to the external capacitor 232 (e.g., via the pin 112) to supply a negative voltage (V1). The external capacitor 233 can be connected between ground and the pin 115 of the PMIC 100. Accordingly, the pin 115 can be connectable to the external capacitor 233 to supply a first positive voltage (V2). Then, the external capacitor 234 can be connected between ground and the pin 116 of the PMIC 100. Accordingly, the pin 116 can be connectable to the external capacitor 234 to supply a second positive voltage (V3).

Various additional connections between the pin 111, the pin 112, the pin 113, the pin 114, the pin 115, the pin 116, the pin 117, internal components of the PMIC 100, and external components of the external electronic device are shown for example in FIG. 1. For example, a drain terminal of the transistor 101 can be connected to the external inductor 210 via the pin 112, and a source terminal of the transistor 101 can be connected to the pin 111 to receive the input voltage (Vin). The transistor 102 can be connected to the pin 117 such that the transistor 102 can be connectable to ground, and the transistor 102 can also be connected to the pin 114 such that the transistor 102 is connectable to the external inductor 210. The transistor 103a and the transistor 103b can be connected in series between the pin 114 and the pin 115 such that the transistor 103a and the transistor 103b can be connectable in series between the external inductor 210 and the external capacitor 233. Similarly, the transistor 104a and the transistor 104b can be connected in series between the pin 114 and the pin 116 such that the transistor 104a and the transistor 104b can be connectable in series between the external inductor 210 and the external capacitor 234. The series connections between the transistor 103a and the transistor 103b and between the transistor 104a and the transistor 104b, the PMIC 100 can provide independent sequencing of the voltage supply rails used to supply the first positive voltage (V2) and the second positive voltage (V3).

The transistor 105 can then be connected to ground and to the pin 113. The transistor 106 can be connected between the transistor 103b and the pin 115, and to ground. Similarly, the transistor 106 can be connected between the transistor 103b and the pin 115, and to ground. As noted, the gate terminals of each of the transistor 101, the transistor 102, the transistor 103a, the transistor 103b, the transistor 104a, the transistor 104b, the transistor 105, the transistor 106, and the transistor 107 can also be connected to the controller 140 such that the controller 140 can control operation of the transistor 101, the transistor 102, the transistor 103a, the transistor 103b, the transistor 104a, the transistor 104b, the transistor 105, the transistor 106, and the transistor 107. Also, as shown in FIG. 1, the transistor 103a and the transistor 103b can be connected to input terminals of an amplifier 151, and an output of the amplifier 151 can be connected to the controller 140. Likewise, the transistor 104a and the transistor 104b can be connected to input terminals of an amplifier 152, and an output of the amplifier 152 can be connected to the controller 140. The outputs of the amplifier 151 and the amplifier 152 can thus allow the controller 140 to compare the states of the transistor 103a and the transistor 103b, and of the transistor 104a and the transistor 104b, respectively.

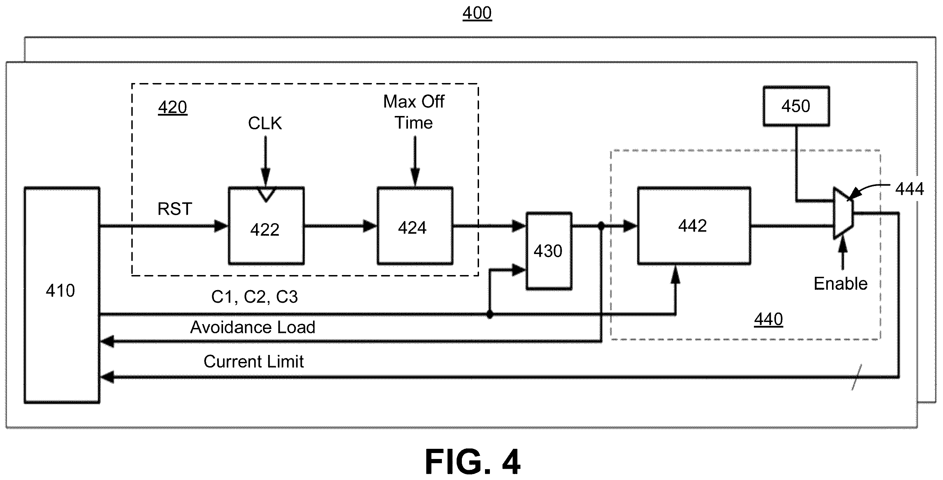

As shown in FIG. 1, the PMIC 100 can further include a comparator circuit 121, a comparator circuit 122, a comparator circuit 123, and a noise control circuit 400 (as will be detailed further below and shown with respect to FIG. 4). The comparator circuit 121 can be used compare the negative voltage (V1) to a first target (threshold) level (Vt1). The comparator circuit 121 can include components such as a digital-to-analog converter (DAC), an amplifier, and resistors, for example, as shown. The output of the comparator circuit 121 (C1) can indicate whether or not the negative voltage (V1) exceeds the first target level (Vt1). The comparator circuit 122 can be used compare the first positive voltage (V2) to a second target (threshold) level (Vt2). The comparator circuit 122 can include components such as a DAC, an amplifier, and resistors, for example, as shown. The output of the comparator circuit 122 (C2) can indicate whether or not the first positive voltage (V2) exceeds the second target level (Vt2). The comparator circuit 123 can be used compare the second positive voltage (V3) to a third target (threshold) level (Vt3). The comparator circuit 123 can include components such as a DAC, an amplifier, and resistors, for example, as shown. The output of the comparator circuit 123 (C3) can indicate whether or not the second positive voltage (V3) exceeds the third target level (Vt3).

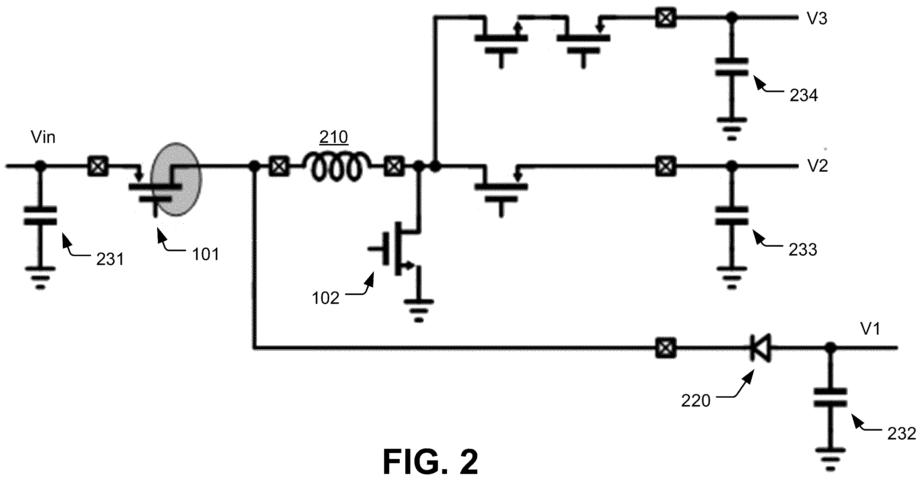

Referring to FIG. 2, a circuit diagram showing example components of the PMIC 100 that can be used to supply multiple voltages is shown, in accordance with some aspects of the disclosure. In FIG. 2, the drain node of the transistor 101 is highlighted, and the PMIC 100 is connected to the external electronic device. As noted, the transistor 101 can be implemented as a PMOS FET, and therefore the drain node of the transistor 101 can handle large negative voltages. As shown in FIG. 2, the transistor 101 is connected to the external capacitor 231 and to a first end of the external inductor 210, and the transistor 102 is connected to a second end of the external inductor 210 and to ground. The external diode 220 is connected between the transistor 101, the first end of the external inductor 210, and the external capacitor 232.

During operation of the PMIC 100, the controller 140 can turn on the transistor 101 to ramp up (e.g., increase) the current that flows through the external inductor 210. Then, after the controller 140 ramps up the current that flows through the external inductor 210, the controller 140 can turn off the transistor 101, and thereby the controller 140 can cause the voltage at the first end of the external inductor 210 to go sharply negative. As a result, the controller 140 can negatively charge the external capacitor 232, and thereby allow the PMIC 100 to supply the negative voltage (V1). The PMIC 100 can supply the first positive voltage (V2) and the second positive voltage (V3) in a different, but similar manner. For example, during operation of the PMIC 100, the controller 140 can turn on both the transistor 101 and the transistor 102 to ramp up the current that flows through the external inductor 210. Then, the controller 140 can turn off the transistor 102, and thus the controller 140 can cause a sharp positive spike in the voltage on the second end of the external inductor 210. As a result, the controller 140 can positively charge both the external capacitor 233 and the external capacitor 234, and thereby allow the PMIC 100 to supply both the first positive voltage (V2) and the second positive voltage (V3).

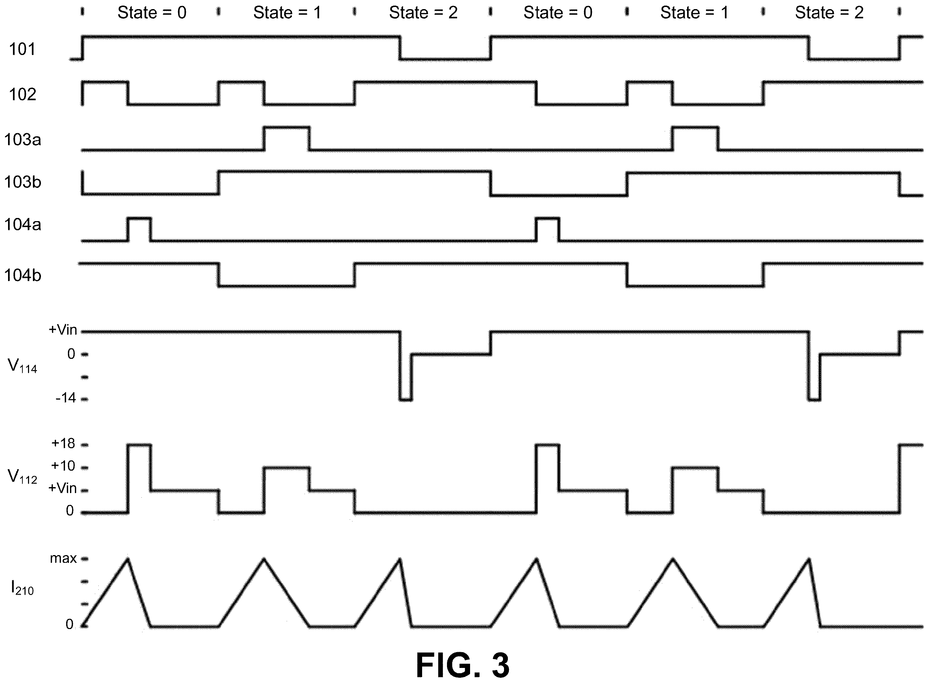

Referring to FIG. 3, an example state diagram illustrating operation of the PMIC 100 during different states is shown, in accordance with some aspects of the disclosure. In FIG. 3, the "0" state represents a state during which the controller 140 positively charges the external capacitor 233 such that the PMIC 100 can supply the first positive voltage (V2). The "1" state represents a state during which the controller 140 positively charges the external capacitor 234 such that the PMIC 100 can supply the second positive voltage (V3). The "2" state represents a state during which the controller 140 negatively charges the external capacitor 232 such that the PMIC 100 can supply the negative voltage (V1). In the state diagram shown in FIG. 3, time is on the x-axis, and different variables are shown along the y-axis. For example, the states (on/off) of each of the transistor 101, the transistor 102, the transistor 103a, the transistor 103b, the transistor 104a, and the transistor 104b are shown in the state diagram of FIG. 3, as labeled on the y-axis. Additionally, the voltages at the pin 112 (V₁₁₂) and at the pin 114 (V₁₁₄), as well as the amount of current flowing through the external inductor 210 (I₂₁₀), are shown in the state diagram of FIG. 3, as labeled on the y-axis.

As can be seen, just one inductor (i.e., the external inductor 210) can be used to power the three separate output supply channels (V1, V2, V3). The controller 140 can cycle through turning on and off the transistor 101, the transistor 102, the transistor 103a, the transistor 103b, the transistor 104a, the transistor 104b to increase and decrease the amount of current flowing through the external inductor 210. By using the outputs (C1, C2, C3) of the comparator circuit 121, the comparator circuit 122, ant the comparator circuit 123, the controller 140 can turn on the transistor 101, the transistor 102, the transistor 103a, the transistor 103b, the transistor 104a, and/or the transistor 104b, respectively, only when needed to replenish the charge on the external capacitor 232, the external capacitor 233, and the external capacitor 234.

The PMIC 100 can use a constant on time (Ton) for increasing (ramping up) the amount of current flowing through the external inductor 210, and therefore the maximum amount of current flowing through the external inductor 210 can be kept constant. For example, as shown in FIG. 3, while the rate of increase of the amount of current flowing through the external inductor 210 is different for each cycle, the maximum amount of current flowing through the external inductor 210 can be kept constant. Also, the PMIC 100 can decrease the amount of current flowing through the external inductor 210 all the way to zero after each cycle, which can help decouple the output supply channels (V1, V2, V3) and reduce crosstalk. Additionally, the controller 140 can switch the transistor 103a and the transistor 103b "back-to-back" to avoid well diodes (e.g., diodes that may be present in the substrate of the PMIC 100). The controller 140 can also switch the transistor 104a and the transistor 104b back-to-back to avoid well diodes.

Referring to FIG. 4, an example diagram illustrating the example noise control circuit 400 that can be implemented in the PMIC 100 is shown, in accordance with some aspects of the disclosure. The noise control circuit 400 as shown in FIG. 4 can be implemented in the PMIC 100 for each of the three separate output channels of the PMIC 100 (V1, V2, V3). That is, the PMIC 100 can include three instances of the noise control circuit 400 as shown in FIG. 4, one for each of the output channels. The noise control circuit 400 can be implemented at least in part using the controller 140, for example. As shown, the noise control circuit 400 can include an output channel 410, the timer circuit 420 (that can include both a timer 422 and a comparison block 424), a latch 430, a current limit control circuit 440 (that can include both a current limit setting block 452 and a multiplexer 454), and finally a register 450. The current limit control circuit 450 can be an optional feature for inclusion in the noise control circuit 400, such that the noise control circuit 400 does not necessarily include the current limit control circuit 450.

The output channel 410 can be any of the channels of the PMIC 100 used to supply the negative voltage (V1), the first positive voltage (V2), or the second positive voltage (V3). The counter 422 can be implemented using a variety of suitable circuit components, and can generally be used to track an amount of time that has elapsed since the output channel 410 has been active. That is, the counter 422 can be used to track how long the output channel 410 has been inactive. Upon activation of the output channel 410, the counter 422 can be reset. The counter 422 can also receive a clock signal as input. The comparison block 424 can be used to compare the value stored in the counter 422 to a predetermined threshold. For example, as shown in FIG. 4, the comparison block 424 can receive a count from the counter 422 as a first input, and can also receive a maximum off time threshold as a second input (e.g., from the controller 140). Then, the comparison block 424 can compare the count to the maximum off time threshold. Accordingly, the timer circuit 420 can generate and provide an output to the latch 430 indicating whether or not the count is greater than the maximum off time threshold (e.g., "1" if the count is greater than the maximum off time threshold, "0" if the count is less than the maximum off time threshold).

The latch 430 can be implemented using various suitable components (e.g., to from an SR latch, to from a flip-flop, etc.). The latch 430 can receive a first input (e.g., the set input) from the timer circuit 420 that indicates whether or not a maximum off time event has occurred for the output channel 410. The latch 430 can also receive a second input (e.g., the reset input) indicating whether the corresponding comparator circuit for the output channel 410 is active. That is, the second input to the latch 430 can be the output of the comparator circuit 121 (C1), the output of the comparator circuit 122 (C2), or the output of the comparator circuit 123 (C3). If a maximum off time event has occurred for the output channel 410, and the corresponding comparator circuit for the output channel 410 is inactive, then the controller 140 can activate a noise avoidance load. For example, the controller 140 can activate the noise avoidance load by turning on the transistor 105 (e.g., if the output channel 410 is V1), turning on the transistor 106 (e.g., if the output channel 410 is V2), or turning on the transistor 107 (e.g., if the output channel 410 is V3).

Also, the PMIC 100 can include additional circuits and/or components connected to the transistor 105, the transistor 106, and the transistor 107 to limit the associated noise avoidance load currents. For example, the transistor 105, the transistor 106, and the transistor 107 can each be connected in series with one or more resistors. Additionally, the transistor 105, the transistor 106, and the transistor 107 can each be sized and/or biased to naturally limit the associated noise avoidance load currents when the transistor 105, the transistor 106, and the transistor 107 are switched on. Further, the PMIC 100 can include one or more control loops connected to the transistor 105, the transistor 106, and the transistor 107 to adjust the associated noise avoidance load currents in real time and thereby keep the switching frequency in the desired range (e.g., out of the audio band).

By turning on the avoidance load in this manner, the noise control circuit 400 can prevent the switching frequency of the output channel 410 from entering the audio band. Accordingly, the PMIC 100 can monitor each of the channels used to supply the negative voltage (V1), the first positive voltage (V2), and the second positive voltage (V3) and, for each channel, make sure that switching for each current pulse stays out of the audio band. In this manner, the PMIC 100 can move the switching noise by forcing the switching regulator (e.g., the controller 140) to switch faster or slower, and thereby the PMIC 100 can reduce crosstalk between the output channels and significantly reduce noise in the audio band. Then, when the corresponding comparator circuit for the output channel 410 becomes active, the controller 140 can deactivate the noise avoidance load. For example, the controller 140 can deactivate the noise avoidance load by turning off the transistor 105 (e.g., if the output channel 410 is V1), turning off the transistor 106 (e.g., if the output channel 410 is V2), or by turning off the transistor 107 (e.g., if the output channel 410 is V3).

Then, the current limit control circuit 440 can be used to dynamically set and/or adjust a maximum current limit for the amount of current flowing through the external inductor 210. As shown in FIG. 4, the current limit setting block 442 can receive both the output from the latch 430 and the corresponding comparator circuit output (C1, C2, C3). As such, the current limit control circuit 440 can set the maximum current limit for the amount of current flowing through the external inductor 210 based on the output of the timer circuit 420 and based on the output of the comparator circuit 121 (C1), the output of the comparator circuit 122 (C2), or the output of the comparator circuit 123 (C3). For example, the current limit control circuit 440 can raise the maximum current limit for the amount of current flowing through the external inductor 210 to raise the average amount of current flowing through the external inductor 210 during the "on" cycle for the output channel 410. As such, the current limit control circuit 440 can lower the switching frequency for the output channel 410, and thereby cause the switching frequency for the output channel 410 to stay out of the audio band.

By doing this, the current limit control circuit 440 can also significantly reduce the audio band noise resulting from operation of the PMIC 100. In some examples, the current limit control circuit 440 can be used as an alternative to the avoidance load activation functionality of the noise control circuit 400 as detailed above. By removing the need to turn on the avoidance load (e.g., to turn on the transistor 105, the transistor 106, or turning on the transistor 107), the noise control circuit 400 can provide noise reduction functionality while requiring less power. However, the use of the avoidance load functionality and the dynamic setting and/or adjusting of the maximum current limit together can also provide advantages in certain applications. As shown in FIG. 4, the multiplexer 444 can be used to either enable or disable the current limit setting block 442. If the current limit setting block 442 is disabled via the multiplexer 444, the noise control circuit 400 (and the PMIC 100 more broadly) can operate using a predetermined maximum current level stored in the register 450, for example.

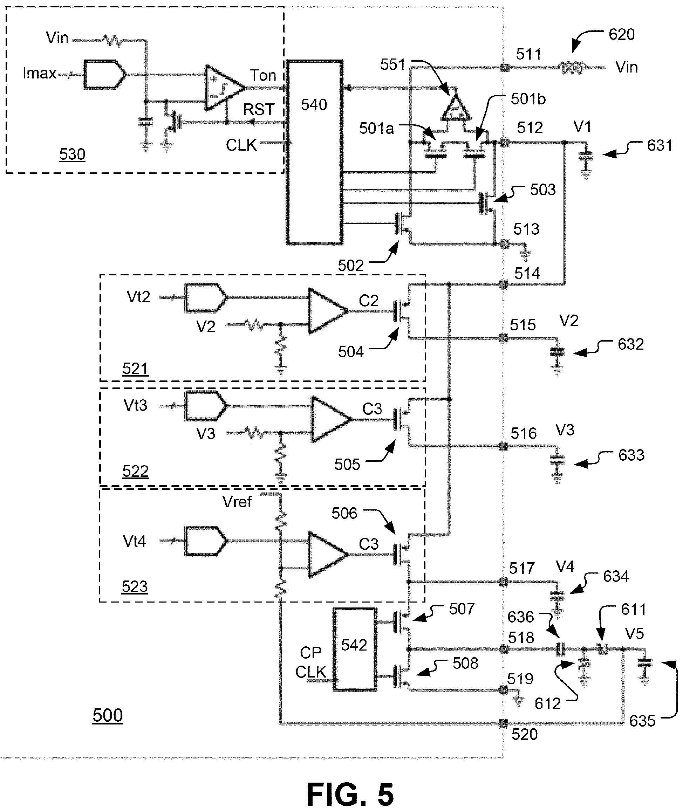

Referring to FIG. 5, a circuit diagram showing an example alternative architecture for another example PMIC 500 is shown, in accordance with some aspects of the disclosure. The PMIC 500 can generally be similar to the PMIC 100 as detailed above. However, as shown, the PMIC 500 can use a boost converter and low-dropout regulators (LDOs) to supply multiple voltages as opposed to using a SIMO boost approach like in the PMIC 100. Like the PMIC 100, the PMIC 500 can provide advantages in some applications in that the PMIC 500 can also be manufactured using a low cost, bulk CMOS process, and therefore the PMIC 500 may not require use of a higher cost, specialty manufacturing process as some alternative PMICs otherwise might. Additionally, like the PMIC 100, the PMIC 500 can also provide a relatively high level of integration by requiring a relatively low external BOM for integration with the electronic device in which the PMIC 500 is installed.

As shown in FIG. 5, the PMIC 500 can include a pin 511, a pin 512, a pin 513, a pin 514, a pin 515, a pin 516, a pin 517, a pin 518, a pin 519, and a pin 520. The pin 511, the pin 512, the pin 513, the pin 514, the pin 515, the pin 516, the pin 517, the pin 518, the pin 519, and the pin 520 can be similar to the pin 111, the pin 112, the pin 113, the pin 114, the pin 115, the pin 116, and the pin 117 of the PMIC 100. Also, the pin 511, the pin 512, the pin 513, the pin 514, the pin 515, the pin 516, the pin 517, the pin 518, the pin 519, and the pin 520 of the PMIC 500 can be connected to various components of the PMIC 500 as shown in FIG. 5, and can be connectable to various external components of an electronic device in which the PMIC 500 can be installed. For example, as shown in FIG. 5, these external components can include an external diode 611, an external diode 612, an external inductor 620, an external capacitor 631, an extemal capacitor 632, an external capacitor 633, an external capacitor 634, an external capacitor 635, and also an external capacitor 636.

The pin 511 can be connectable to the external inductor 620 to receive an input voltage. The pin 513 and the pin 519 can be connectable to ground (e.g., a reference voltage level in the external electronic device). The pin 512 can be connectable to the external capacitor 631 to supply a first positive voltage (V1), the pin 515 can be connectable to the external capacitor 632 to supply a second positive voltage (V2), the pin 516 can be connectable to the external capacitor 633 to supply a third positive voltage (V3), pin 517 can be connectable to the external capacitor 634 to supply a fourth positive voltage (V4), and the pin 518 can be connectable to the external capacitor 635 to supply a negative voltage (V5). The first positive voltage (V1) can be between +15V and +20V (e.g., +18.5V), the second positive voltage (V2) can also be between +15V and +20V (e.g., +18V), the third positive voltage (V3) can be between +8V and +12V (e.g., +10V), the fourth positive voltage (V4) can be between +12V and +16V (e.g., +14.5V), and the negative voltage (V5) can be between -10V and -16V (e.g., -14V).

Also, as shown in FIG. 5, the PMIC 500 can include a number of transistors including, but not limited to, a transistor 501a, a transistor 501b, a transistor 502, a transistor 503, a transistor 504, a transistor 505, a transistor 506, a transistor 507, and a transistor 508. The transistor 501a, the transistor 501b, the transistor 502, the transistor 503, the transistor 504, the transistor 505, the transistor 506, the transistor 507, and the transistor 508 can be implemented using various suitable types of transistors, such as NMOS FETs and/or PMOS FETs (e.g., 24V FETs), for example. The PMIC 500 can also include a controller 540 and a controller 542, which can each include various suitable types of processing circuitry and memory (similar to the controller 100). The controller 540 can control the transistor 501a, the transistor 501b, the transistor 502, and the transistor 503, whereas the controller 542 can control the transistor 507 and the transistor 508 (e.g., by sending gate drive signals to the respective transistor gate terminals). Additionally, the transistor 501a and the transistor 501b can be connected in series between the pin 511, the transistor 502 and the pin 512. As shown in FIG. 5, the transistor 501a and the transistor 501b can be connected to input terminals of an amplifier 551, and then the output of the amplifier 551 can be connected to the controller 540 to allow the controller 540 to compare the states of the transistor 501a and the transistor 501b.

As shown in FIG. 5, the PMIC 500 can also include a comparator circuit 521, a comparator circuit 522, a comparator circuit 523, and a noise control circuit 530 (which can be similar to the noise control circuit 400 of the PMIC 100 as detailed above) The comparator circuit 521 can be used compare the second positive voltage (V2) to a second target (threshold) level (Vt2). The comparator circuit 521 can include components such as a digital-to-analog converter (DAC), an amplifier, and resistors, for example, as shown. The output of the comparator circuit 521 (C1) can indicate whether or not the second positive voltage (V2) exceeds the second target level (Vt2), and can be used to control the transistor 504. The comparator circuit 522 can be used compare the third positive voltage (V3) to a third target (threshold) level (Vt3). The comparator circuit 522 can include components such as a DAC, an amplifier, and resistors, for example, as shown. The output of the comparator circuit 522 (C2) can indicate whether or not the third positive voltage (V3) exceeds the third target level (Vt3), and can be used to control the transistor 505. The comparator circuit 523 can be used compare the fourth positive voltage (V4) to a fourth target (threshold) level (Vt4). The comparator circuit 523 can include components such as a DAC, an amplifier, and resistors, for example, as shown. The output of the comparator circuit 523 (C3) can indicate whether or not the fourth positive voltage (V4) exceeds the fourth target level (Vt4), and can be used to control the transistor 506.

The controller 542, the transistor 507, and the transistor 508 can be included in the PMIC 500 in the configuration shown in FIG. 5 to provide a charge pump circuit. Specifically, upon connection of the PMIC 500 to the external diode 611, the external diode 612, an external inductor 620, the external capacitor 635, and the external capacitor 636 as shown in FIG. 5, the charge pump circuit including the controller 542, the transistor 507, and the transistor 508 of the PMIC 500 can invert the fourth positive voltage (V4), and thereby supply the negative voltage (V5). Specifically, the controller 542 can control the transistor 507 and the transistor 508 to provide the charge pump functionality and thereby to supply the negative voltage (V5). The fourth positive voltage (V4) along with the second positive voltage (V2) and the third positive voltage (V3) can be supplied by the LDOs as shown in FIG. 5.

In general, the boost control scheme implemented in the PMIC 500 can provide a constant on time (Ton) for increasing (ramping up) the amount of current flowing through the external inductor 620, and therefore the maximum amount of current flowing through the external inductor 620 can be kept constant (similar to the PMIC 100). As in the PMIC 100, this on time can be proportional to 1/Vin for a constant peak inductor current based on the input voltage. The comparator-based feedback in both the PMIC 100 and the PMIC 500 can provide good transient and stability in performance. Further, the peak inductor current and the pull-down currents in the PMIC 500 can again be programmable and/or dynamically adjustable for switching frequency control (e.g., for noise reduction).

## Claims

1. A power management circuit, comprising:
a first pin connectable to an input voltage;
a second pin connectable to a first external capacitor to supply a positive voltage;
a p-channel metal-oxide-semiconductor field-effect transistor (PMOS FET) connected to the first pin to receive the input voltage, the PMOS FET connectable to an external inductor and to a second external capacitor to supply a negative voltage; and
a controller configured to:
during a first time period, turn on the PMOS FET to increase an amount of current flowing through the external inductor; and
during a second time period, turn off the PMOS FET to negatively charge the second external capacitor.

2. The power management circuit of claim 1, wherein a drain terminal of the PMOS FET is connectable to the external inductor.

3. The power management circuit of claim 1 or claim 2, further comprising an n-channel metal-oxide-semiconductor field-effect transistor (NMOS FET) that is connectable to the external inductor and to ground.

4. The power management circuit of claim 3, wherein the controller is configured to:
during a third time period, turn on the NMOS FET to increase the amount of current flowing through the external inductor; and
during a fourth time period, turn off the NMOS FET to positively charge the first external capacitor.

5. The power management circuit of claim 4,
further comprising a second NMOS FET and a third NMOS FET that are connectable in series between the external inductor and the first external capacitor;
and/or
wherein the PMOS FET is on during the third time period and during the fourth time period.

6. The power management circuit of any of the preceding claims,
further comprising a third pin connectable to a third external capacitor to supply a second positive voltage that is different in magnitude from the positive voltage;
and/or
further comprising a fourth pin connected to the NMOS FET.

7. The power management circuit of any of the preceding claims, wherein the PMOS FET is connectable to an external diode that is connected between the PMOS FET and the second external capacitor,
in particular wherein the power management circuit further comprises fifth pin that is connected to the PMOS FET and connectable to the external diode, in particular wherein the negative voltage is at least -6V.

8. The power management circuit of any of the preceding claims, wherein:
the power management circuit comprises an n-channel metal-oxide-semiconductor field-effect transistor (NMOS FET) that is connectable to the second external capacitor and connected to ground;
the power management circuit comprises a timer circuit configured to generate an output indicative of whether an amount of elapsed time since the PMOS FET has been turned on exceeds a threshold; and
the controller is configured to turn on the NMOS FET based on an output of the timer circuit.

9. The power management circuit of claim 8, wherein:
the power management circuit comprises a comparator circuit configured to compare the negative voltage to a target; and
the controller is configured to turn off the NMOS FET responsive to determining that the negative voltage exceeds the target based on an output of the comparator circuit,
in particular wherein the controller is configured to set a maximum current limit for the amount of current flowing through the external inductor based on the output of the timer circuit and the output of the comparator circuit.

10. A power management integrated circuit, comprising:
a first pin connectable to an input voltage;
a second pin connectable to a first external capacitor to supply a first positive voltage;
a third pin connectable to a second external capacitor to supply a second positive voltage that is different in magnitude form the first positive voltage;
a p-channel metal-oxide-semiconductor field-effect transistor (PMOS FET) connected to the first pin to receive the input voltage, the PMOS FET connectable to an external inductor and to a third external capacitor to supply a negative voltage; and
a controller configured to:
during a first time period, turn on the PMOS FET to increase an amount of current flowing through the external inductor; and
during a second time period, turn off the PMOS FET to negatively charge the third external capacitor.

11. The power management circuit of claim 10, wherein:
the first positive voltage is between +15V and +20V;
the second positive voltage is between +10V and +15V; and
the negative voltage is between -10V and -15V.

12. The power management circuit of claim 10 or claim 11, wherein:
the power management circuit comprises an n-channel metal-oxide-semiconductor field-effect transistor (NMOS FET) that is connectable to the external inductor and to ground;
during a third time period, the controller is configured to turn on the NMOS FET to increase the amount of current flowing through the external inductor; and
during a fourth time period, the controller is configured to turn off the NMOS FET to positively charge the first external capacitor and the second external capacitor.

13. The power management circuit of any of claims 10 to 12, wherein:
the PMOS FET is connectable to an external diode that is connected between the PMOS FET and the third external capacitor; and
the power management circuit comprises a fourth pin that is connected to the PMOS FET and connectable to the external diode.

14. A power management integrated circuit, comprising:
a first pin connectable to an input voltage;
a second pin connectable to a first external capacitor to supply a positive voltage;
a p-channel metal-oxide-semiconductor field-effect transistor (PMOS FET) connected to the first pin to receive the input voltage, the PMOS FET connectable to an external inductor and to a second external capacitor to supply a negative voltage;
an n-channel metal-oxide-semiconductor field-effect transistor (NMOS FET) that is connectable to the external inductor and to ground; and
a controller configured to:
during a first time period, turn on the PMOS FET to increase an amount of current flowing through the external inductor;
during a second time period, turn off the PMOS FET to negatively charge the second external capacitor;
during a third time period, turn on the NMOS FET to increase the amount of current flowing through the external inductor; and
during a fourth time period, turn off the NMOS FET to positively charge the first external capacitor.

15. The power management circuit of claim 14, wherein:
the power management circuit comprises a timer circuit configured to generate an output indicative of whether an amount of elapsed time since the NMOS FET has been turned on exceeds a threshold;
the power management circuit comprises a comparator circuit configured to compare the positive voltage to a target; and
the controller is configured to adjust a maximum current limit for the amount of current flowing through the external inductor based on the output of the timer circuit and the output of the comparator circuit.
